# EUROPÄISCHE PATENTSCHRIFT

(11) **EP 0 906 594 B1**
(45) Veröffentlichungstag und Bekanntmachung des Hinweises auf die Patenterteilung: **12.09.2001**
(21) Anmeldenummer: 97931631.2
(22) Anmeldetag: 20.06.1997
(51) Int. Cl.: G05B 13/02

(54) **VERFAHREN UND SYSTEM ZUR INBETRIEBSETZUNG VON INDUSTRIEANLAGEN, INSBESONDERE DER GRUNDSTOFFINDUSTRIE**
PROCESS AND SYSTEM FOR COMMISSIONING INDUSTRIAL PLANTS, IN PARTICULAR IN THE PRIMARY INDUSTRY
PROCEDE ET SYSTEME DE MISE EN SERVICE D'INSTALLATIONS INDUSTRIELLES, NOTAMMENT DANS L'INDUSTRIE DE BASE

(30) Priorität: 21.06.1996 DE 19624926
(43) Veröffentlichungstag der Anmeldung: 07.04.1999
(73) Patentinhaber: SIEMENS AKTIENGESELLSCHAFT, 80333 München (DE)
(72) Erfinder: SÖRGEL, Günter, D-90455 Nürnberg (DE)
(86) Internationale Anmeldenummer: DE9701285
(87) Internationale Veröffentlichungsnummer: WO9750021

(56) Entgegenhaltungen:
- EP-A- 0 607 493
- WO-A-95/14277
- WO-A-96/02025
- DE-A- 4 019 395
- DE-A- 4 413 836
- DE-A- 19 508 476
- US-A- 4 819 149
- US-A- 5 291 416
- BELTRAN H ET AL: "HIGHLIGHTS OF THE GURI HYDROELECTRIC PLANT COMPUTER CONTROL SYSTEM" IEEE COMPUTER APPLICATIONS IN POWER, Bd. 1, Nr. 3, Juli 1988, Seiten 4-8, XP000046870

## Beschreibung

Die Erfindung betrifft ein Verfahren und System zur Inbetriebsetzung von Industrieanlagen, insbesondere der Grundstoffindustrie, mit einem Anlagenleitsystem, das Non-Controlfunktionen und Controlfunktionen durchführt und dessen Controlfunktionen mit Prozeßmodellen, insbesondere regeltechnischen Modellen, etwa in der Form von mathematischen Modellen, neuronalen Netzmodellen, Expertensystemen etc. in einer Leitsystemrecheneinheit arbeitet. Ein derartiges Leitsystem offenbart z.B. die DE 195 08 476 A1.

Bei der Regelung von Industrieanlagen, insbesondere von Anlagen, in denen sehr schnelle, sehr langsame oder sprunghaft verlaufende Prozesse oder Prozesse, für die es keine geeigneten Zustandssensoren gibt, ablaufen, wird meist mit regeltechnischen Modellen gearbeitet. Derartige Anlagen weisen in der Regel ein Basis-Automatisierungssystem und ein Prozeßfuhrungssystem auf (Non-Control und Control). Die Inbetriebsetzung größerer Anlagen ist erfahrungsgemäß sehr zeit- und kostenaufwendig und erfordert in die Anlagentechnologie eingearbeitete Spezialisten. Dies gilt auch für den regeltechnischen Anlagenentwurf und die regeltechnische Projektierung der einzelnen Komponenten.

Es ist Aufgabe der Erfindung, für Anlagen der vorstehend geschilderten Art, insbesondere für Anlagen der Grundstoffindustrie, aber auch für Anlagen der Chemieindustrie und zur Erzeugung elektrischer Energie, ein Inbetriebsetzungsverfahren und ein dafür geeignetes System anzugeben, mit dem bei optimalem Inbetriebsetzungsergebnis eine Zeit- und Kostenreduktion erreichbar ist. Dabei soll auch der laufende Betrieb der inbetriebgesetzten Anlage nachträglich laufend verbessert werden können und es sollen leicht auswertbare Erkenntnisse für die regeltechnische Projektierung und den Entwurf entsprechender Anlagen gewonnen werden. Das Ziel kann zusammenfassend als Senkung der Engineering-Kosten bei gleichzeitiger Verbesserung der Anlagenfunktion bezeichnet werden.

Die Aufgabe wird durch ein Verfahren gemäß Anspruch 1 bzw. eine Einrichtung gemäß Anspruch 9 gelöst. Durch diese Aufteilung der Inbetriebsetzung in eine sogenannte Basis-Inbetriebsetzung und eine technologische Inbetriebsetzung kann vorteilhaft weitgehend darauf verzichtet werden, Regeltechnik-Spezialisten, insbesondere Spezialisten für die Parametrierung und Verbesserung von regeltechnischen Modellen, vor Ort einsetzen zu müssen. Die Inbetriebsetzungskosten können so erheblich reduziert werden. Darüber hinaus kann die Inbetriebsetzung schneller und sicherer erfolgen, da zur technologischen Inbetriebsetzung ein Spezialistenteam zur Verfügung gestellt werden kann, dem alle Hilfsmittel einer Technologiezentrale sowie externe Berater zur Verfügung stehen.

Es ist bereits bekannt, PC's durch Programme aufzurüsten, die durch eine Datenübertragung in den PC eingegeben werden. Desweiteren ist eine Diagnose von PC's, aber auch von einzelnen Automatisierungsgeräten, wie z.B. Werkzeugmaschinensteuerungen oder speicherprogrammierbaren Steuerungen bekannt. Die bekannte Verfahrensweise für die Aufrüstung, Diagnose und Funktionsverbesserung von Einzelgeräten läßt sich jedoch nicht auf die Inbetriebsetzung von Gesamtanlagen, insbesondere Gesamtanlagen von der Komplexität von Anlagen der Grundstoffindustrie übertragen. Hierzu sind Lernroutinen ebenso notwendig wie die Benutzung der Rechenintelligenz der Anlage, lange Zugriffszeiten und ein Dialog im Sinn eines "Trial and Error". Dies wurde bisher in dem benötigtem Umfang für nichtdurchführbar gehalten.

In Ausgestaltung der Erfindung ist vorgesehen, daß bei der Inbetriebsetzung der Controlfunktionen eine technologische Optimierung durchgeführt wird. Die Optimierung wird vorteilhaft "step by step" fernbeeinflußt in zumindest einer Leitsystemrecheneinheit der Anlage durchgeführt, die einzelnen Optimierungsschritte laufen also auf einer Recheneinheit des Prozeßleitsystems ab, so daß sich die Probleme nicht ergeben können, die bei einer Übernahme eines auf einer externen Recheneinheit durchgeführten Optimierungsschritts auf die Recheneinheit des Leitsystems ergeben könnten. Angesichts der Komplexität der Programme in Anlagenleitsystemen wäre sonst immer mit Softwarefehlern bei der Übernahme optimierter Programmteile zu rechnen. Die Vermeidung von Implementierungsproblemen ist ein erheblicher Vorteil des erfindungsgemäßen Systems.

Ergänzend zur Fern-Inbetriebsetzung, -Funktionsverbesserung und -Optimierung des Controlteils ist auch eine fernbeeinflußte Verbesserung des Non-Controlteils vorgesehen. Auch die Basisautomatisierung einer Industrieanlage ist heutzutage so komplex, daß sich das erfindungsgemäße Fernoptimieren hierfür lohnt. Dabei wird vorteilhaft die entsprechende Ebene des Anlagenleitsystems verwendet.

Nach der Inbetriebsetzung der Controlfunktionen mit der Startoptimierung erfolgt laufend eine weitere Anlagenbetriebsverbesserung durch technologische Optimierung mit Hilfe der Technologiezentrale. So ist sichergestellt, daß die Anlage regeltechnisch optimal weiterbetrieben wird. Dies ist insbesondere bei Änderung des Erzeugnisprogramms, z.B. durch Aufnahme weiterer Materialqualitäten in das Erzeugnisprogramm, wichtig.

Die Optimierung bezieht sich insbesondere auf die Parametrierung von Modellen, insbesondere in Form von Algorithmen oder künstlichen neuronalen Netzen (KNN), sowie auf eine Weiterentwicklung der Algorithmen der Modelle oder der Ausbildung der KNN, aber auch von rechentechnisch ausgewertetem Expertenwissen, etwa in Form von Grenzkurven etc. So können die wichtigsten Module einer modellbasierten Regelung fortlaufend verbessert werden, um ein optimales Anlagenverhalten zu erreichen.

Es ist vorteilhaft vorgesehen, daß bei der Verwendung von neuronalen Netzen als Prozeßmodelle die Adaption parallel zu einem Netztraining stattfindet. So wird den Eigenschaften von künstlichen neuronalen Netzen (KNN) erfindungsgemäß besonders gut Rechnung getragen. Sie befinden sich stets in dem für die Optimierung vorteilhaftesten Zustand. Von besonderem Vorteil ist weiterhin, wenn die künstlichen neuronalen Netze (KNN), zur Verbesserung von Algorithmen und/oder Modellen eingesetzt werden, und wenn dabei ein geschlossener Kreis gebildet wird, der als unmittelbar geschlossener Kreis in einer Leitsystemrecheneinheit oder als mittelbar über die Technologiezentrale geschlossener Kreis ausgebildet ist. Insbesondere der über die Technologiezentrale geschlossene Kreis gewährleistet dabei, daß stets die neuesten regel- und rechentechnischen Erkenntnisse in die Optimierung und Verbesserung von Parametern und/oder Modellen einfließen können. Vorteilhaft ist dabei auch vorgesehen, daß die Weiterentwicklung von Modellen mit Hilfe einer Evolutionsstrategie, z.B. über genetische Algorithmen, durchgeführt wird. So kann auch eine notwendige Weiterentwicklung der Modelle zur Optimierung des Anlagenverhaltens und gegebenenfalls auch eine Optimierung der Anlage selbst stattfinden.

Zur vorteilhaften Durchführung des Verfahrens ist ein Inbetriebsetzungs- oder Anlagenbetriebsverbesserungssystem vorgesehen, daß zumindest eine anlagenfern installierte Technologiezentrale - insbesondere eine Inbetriebsetzungs- und/oder Betriebsverbesserungszentrale - aufweist, die durch Datenfernübertragungsmittel mit zumindest einer Leitsystemrecheneinheit einer technologisch inbetriebzusetzenden oder technologisch weiter zu verbessernden Anlage in Verbindung steht. Hierdurch werden die Vorteile des erfindungsgemäßen Verfahrens erreichbar.

In Ausgestaltung des Systems ist vorgesehen, daß es in einer Technologiezentrale ein internes Netz aufweist, das vorzugsweise als Ethernet mit Twisted Pair-Verbindungen mit mindestens 10 Megabit pro Sekunde Übertragungsgeschwindigkeit ausgerüstet ist, das insbesondere nach dem Protokoll TCP-IP arbeitet. Hierdurch ergibt sich ein kostengünstig realisierbares, sicheres internes Netz, das alle für eine Ferninbetriebsetzungs und -optimierungszentrale notwendigen Eigenschaften aufweist. Das System weist weiterhin ein mit dem internen Netz verbundenes Ferninbetriebsetzungs- oder Betriebsverbesserungsnetz zur Kommunikation mit Industrieanlagen auf, das bekannte, übliche Datenübertragungskomponenten (ISDN, Telefon, Modem, Internet-Anschlüsse) besitzt und durch zumindest eine Sicherheits-Datenübergabeeinrichtung (Firewall) mit der Technologiezentrale verbunden ist. So ist mit üblichen kostengünstigen Komponenten der Aufbau eines Ferninbetriebsetzungsnetzes möglich, das einen für ein sicheres Arbeiten der Anlage und für die Abwehr von Betriebsspionage-Angriffen etc. notwendigen Aufbau aufweist.

In einer Ausgestaltung weist das System im Bereich der Technologiezentrale Außenstellen, z.B. Projektbüros auf, die räumlich getrennt, aber datentechnisch, z.B. über ISDN-Leitungen, mit dieser verbunden sind und mit dieser die Technologiekompetenz bilden. So ist die Diskussion und/oder Lösung von Optimierungsaufgaben durch außenstehende Fachleute möglich, deren Teams etc. mit in die Technologiekompetenz einbezogen werden. Dabei ist ein Zusammenarbeiten völlig unterschiedlicher Teams möglich.

In einer weiteren Ausgestaltung der Erfindung ist vorgesehen, daß die Inbetriebsetzungs- oder Betriebsverbesserungszentrale eine Administratoreinheit, insbesondere mit einer Auswertesoftware für gesammelte Daten aufweist und gleichzeitig, zur Logbuchführung geeignet ausgebildet ist. Zur Optimierung, insbesondere von Arbeitspunkten und speziellen Arbeitsschritten, ist es notwendig, zu verfolgen, wie sich Regeleingriffe bei früheren Optimierungsmaßnahmen ausgewirkt haben. Dies ist vorteilhaft durch die erfindungsgemäße Lösung möglich.

Für ISDN- und Internet-Verbindungen sind vorteilhaft Router vorhanden, die die gewünschten Verbindungen herstellen. Mit Hilfe dieser Router, die gegebenenfalls automatisch arbeiten, kann für den Dialog der Bediener der einzelnen Anlagenkomponenten und der Komponenten der Technologiezentrale sowie für die Verbindung zwischen den einzelnen Recheneinheiten die jeweils optimale Verbindung hergestellt werden. Diese kann je nach Wochentag und Tageszeit unterschiedlich sein.

Zur Durchführung der Erfindung sind im Leitsystem der Anlage rechentechnische Technologiemodule, eine Datensammlungseinheit etc. sowie in der Zentrale Personal mit technologischem Wissen, Datenbanken für die jeweiligen Kunden, allgemeine und kundenspezifische Technologiemodule, insbesondere in einer in das Anlagenleitsystem modulartig eingebbaren Form vorhanden.

So ist eine schrittweise Verbesserung mit einfacher Eingabe der neuen Daten in das Gesamtsystem möglich.

Im Anlagenleitsystem sind Recheneinrichtungen für die Adaption anlagenspezifischer Parameter, für das Speichern anlagenspezifisch ausgebildeter Modelle, für das Speichern von Vorausberechnungsalgorithmen, für das Speichern von Trendverfolgungen und für das Speichern von Adaptionsalgorithmen vorgesehen. So ist das Anlagenleitsystem in der Lage, die technologische Optimierung nach den Vorgaben der Technologiezentrale durchzuführen.

Es ist insbesondere vorgesehen, daß für neuronale Netze, wie sie z.B. in Walzwerken oder bei Elektrolichtbogenöfen, d.h. in der Grundstoffindustrie, häufig eingesetzt werden, eine Optimierung und ein Training parallel durchgeführt wird. Hierfür sind spezielle, vorteilhaft günstig ausgebildete Softwaremodule vorhanden. Ebenso Diagnosespeicher sowie weitere für die technologische Optimierung der Anlage erforderliche Recheneinrichtungen. Diese, softwaregeführte, Recheneinrichtungen können über die erfindungsgemäß benutzten Datenübertragungsmittel beeinflußt werden.

Die Hard- und Softwareeinrichtungen der Inbetriebsetzungsoder Betriebsverbesserungszentrale umfassen sowohl unspezifische Hardwareeinrichtungen, Softwaretools, Inbetriebsetzungstools, Softwareentwicklungstools, Softwareevolutionstools, KNN-Trainingstools, statistische Auswerteprogramme etc. als auch anlagenspezifische spezielle Softwaretools, wobei soweit wie möglich auf anlagenneutrale Module zurückgegriffen wird und anlagenspezifische, speziell entwickelte Module, nur dann eingesetzt werden, wenn es notwendig ist.

Das erfindungsgemäß vorhandene Kommunikations- und Optimierungssystem zur technologischen Anlagenoptimierung ist insbesondere dialogfähig ausgebildet und weist vorteilhaft, insbesondere optische Erfassungskomponenten sowohl für die handelnden Personen als auch für die zu optimierenden oder zu diagnostizierenden Anlagenteile auf. So können Optimierungsvorschläge, Änderungsvorschläge, Diagnosen etc. in einer Weise durchgeführt werden, die der Anwesenheit der Spezialisten vor Ort weitgehend entspricht. Es reisen also tatsächlich nicht mehr Personen, sondern Informationen. Daher weist vorteilhaft die Inbetriebsetzungszentrale und die Anlage sowie der Anlagenleitstand Monitore und auch Kameras auf. Das gleiche gilt für Außenstellen der Technologiezentrale, z.B. Projektbüros oder spezielle Softwareentwicklungseinheiten, so daß tatsächlich so gearbeitet werden kann, als befänden sich alle an der Optimierung und der Weiterentwicklung beteiligten Personen an einem Ort, speziell am Ort der Anlage. Dies ist insbesondere für das Arbeiten mit künstlichen neuronalen Netzen (KNN, sowie Neuro-Fuzzy und Fuzzy-Anwendungen), bei denen von dem Sammeln der Trainingsdaten bis zur Ausgabe neuer Parameter ein einheitliches Handeln erforderlich ist, von erheblichem Vorteil.

Die Erfindung wird anhand von Zeichnungen näher erläutert, aus denen ebenso wie aus den Unteransprüchen weitere, auch erfindungswesentliche, Einzelheiten entnehmbar sind. Im einzelnen zeigen:
- FIG 1: eine symbolhafte Darstellung des Prinzips der Erfindung mit wesentlichen Einzelheiten,
- FIG 2: die wesentlichen Teile der Technologiezentrale in symbolhafter Darstellung,
- FIG 3: das gebildete System in symbolhafter Darstellung,
- FIG 4: eine Darstellung in Bezug auf die Optimierung eines Walzvorgangs mit Einsatz eines neuronalen Netzes zur Optimierung der Walzkraftberechnung und
- FIG 5: ein einfaches Zusammenwirken eines mathematischen Modells mit einem Modell in Form eines neuronalen Netzes.

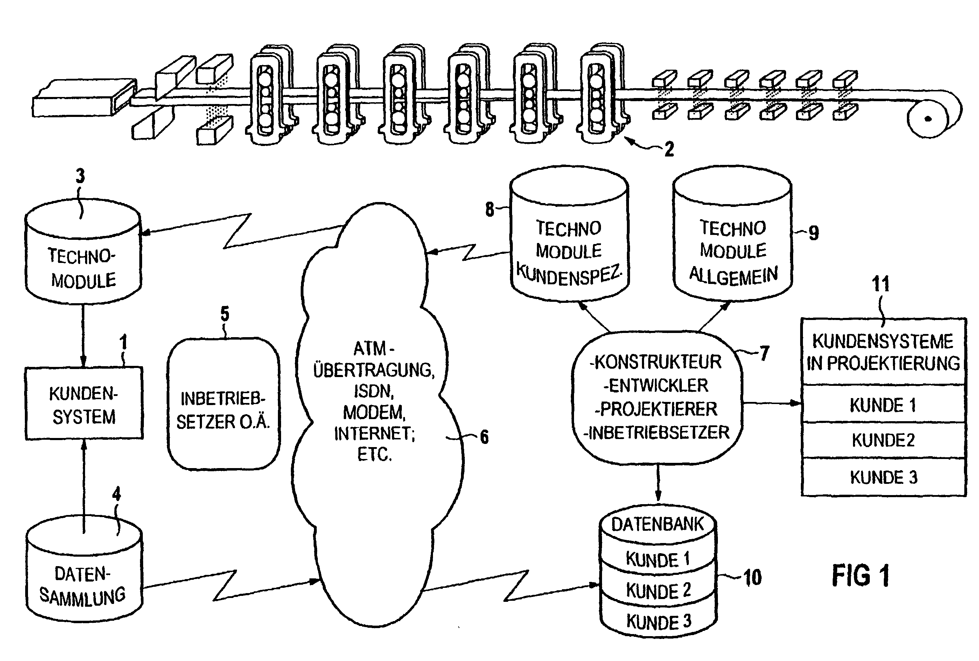

In FIG 1 bezeichnet 1 das Leitsystem des Kunden, das Technologiemodule 3 und eine Datensammlung 4 enthält. In Betrieb gesetzt wird das Leitsystem des Kunden durch Inbetriebsetzer 5. Tatsächlich handelt es sich vor Ort um eine Inbetriebsetzungsmannschaft. Über die als Bubble dargestellte Übertragungsebene 6, die aus ISDN-Verbindungen, insbesondere mit ATM-Komponenten zur Bildübertragung, aber auch über Telefonmodems oder das Internet verfügt, stehen die Komponenten 1, 3, 4 und 5, die z.B. der Inbetriebsetzung eines Walzwerks 2 dienen, mit den Komponenten 7 bis 11 in Verbindung. Bei den Komponenten 7 bis 11 handelt es sich um die Komponenten in oder in Verbindung mit der Technologiezentrale mit seiner Mannschaft 7. In der Technologiezentrale stehen allgemeine Technologiemodule 9, kundenspezifische Technolgiemodule 8, eine Datenbank für verschiedene Kunden und Projektierungskomponenten 11 für unterschiedliche Kunden sowie weitere in ihren Einzelheiten aus der Beschreibung entnehmbare Komponenten zur Verfügung. Die Trennung der vor Ort befindlichen Komponenten und der Komponenten in oder in Verbindung mit der Technologiezentrale ist deutlich erkennbar. Im Gegensatz zu den bekannten Diagnose- oder Aufrüstungsroutinen handelt es sich nicht um eine zeitlich eng begrenzte, sondern um eine relativ dauerhafte Verbindung der vor Ort- und der Technologiezentralekomponenten. Die in Verbindung mit der Technologiezentrale stehenden Komponenten brauchen dabei nicht örtlich konzentriert sein, sie erstrecken sich vielmehr gegebenenfalls auf unterschiedliche Kontinente. Wegen der Zeitverschiebung kommt es daher zu einem unter Umständen 24-Stunden pro Tag anhaltenden Optimierungs-, Beratungs- und Diagnosevorgang beim Kunden. Anlagen der Grundstoffindustrie, der Chemie und der Energieerzeugung sind ja auch derart ausgebildet, daß sie einen kontinuierlichen 24-Stunden Betrieb ermöglichen.

Die Anlage selbst bleibt dabei vorteilhaft stets autonom funktionsfähig, da lediglich die auf der Anlage vorhandene Intelligenz weiter verbessert wird. Unterbrechungen der Leitungs- oder Satellitenverbindungen zwischen der Anlage und der Technologiezentrale wirken sich daher nicht auf die Produktion aus. Die einzelnen Optimierungsschritte werden lediglich später durchgeführt.

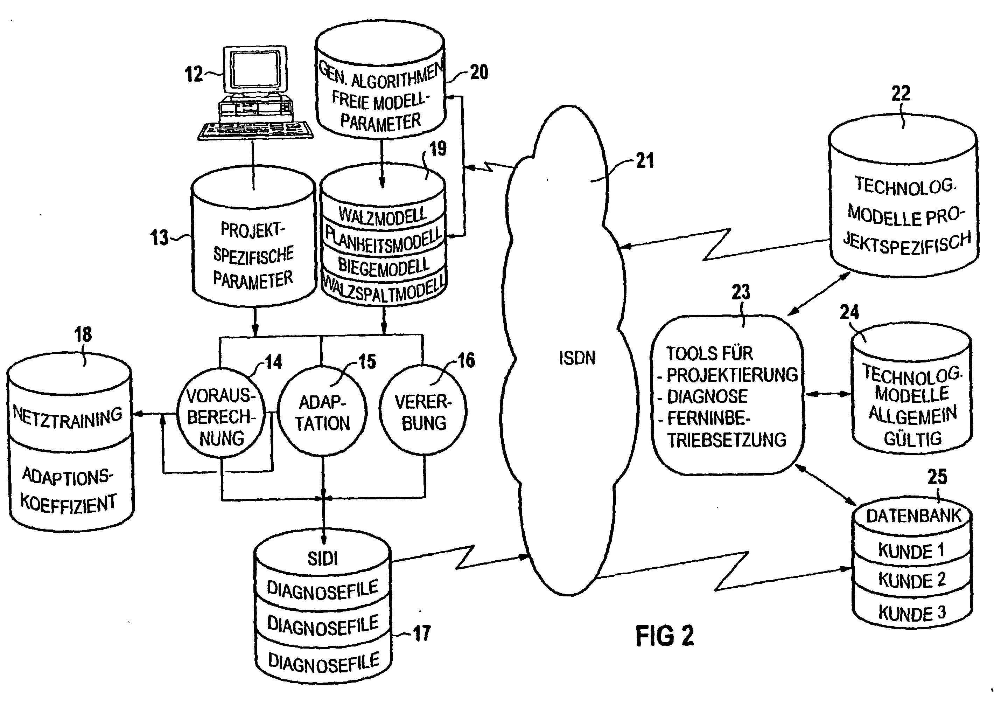

In FIG 2 bezeichnet 12 einen Eingabeplatz für projektspezifische Parameter 13, mit denen in einer Vorausberechnungseinheit 14, einer Adaptionseinheit 15 und einer Einheit 16, die die Vererbungsgesetze berücksichtigt, mit Hilfe einer Netztrainingseinheit 18 und einem Diagnoseteil 17, im Durchlauf und in Schleifen regelungstechnisch optimierte Daten der Kundenanlage ermittelt werden. Bei einem Walzwerk wird dabei beispielsweise mit den in 19 einzeln angegebenen Modellen, wie Walzkraftmodell, Planheitsmodell, Biegemodell und Walzspaltmodell gearbeitet, die in der Einheit 20 noch durch genetische Algorithmen und neue Modellparameter verbessert werden können. Zusammen mit den projektspezifischen Parametern aus der Einheit 13 ermöglichen sie die in den Einheiten 14, 15 und 16 ablaufenden Optimierungs-Rechenvorgänge. Die generierten Daten gelangen über die Übermittlungsebene 21, hier steht für alle Datenübertragungsmittel symbolisch ISDN, in die kundenspezifisch aufgeteilte Datenbank 25, wo die Daten mit Hilfe von Tools für die Projektierung, die Diagnose, von Ferninbetriebsetzungstools und allgemein gültige technologische Modelle zu technologischen, projektspezifischen Modellen 22 führen. Diese gelangen über die Ebene 21 in zumindest eine Recheneinheit des Kundenleitsystems.

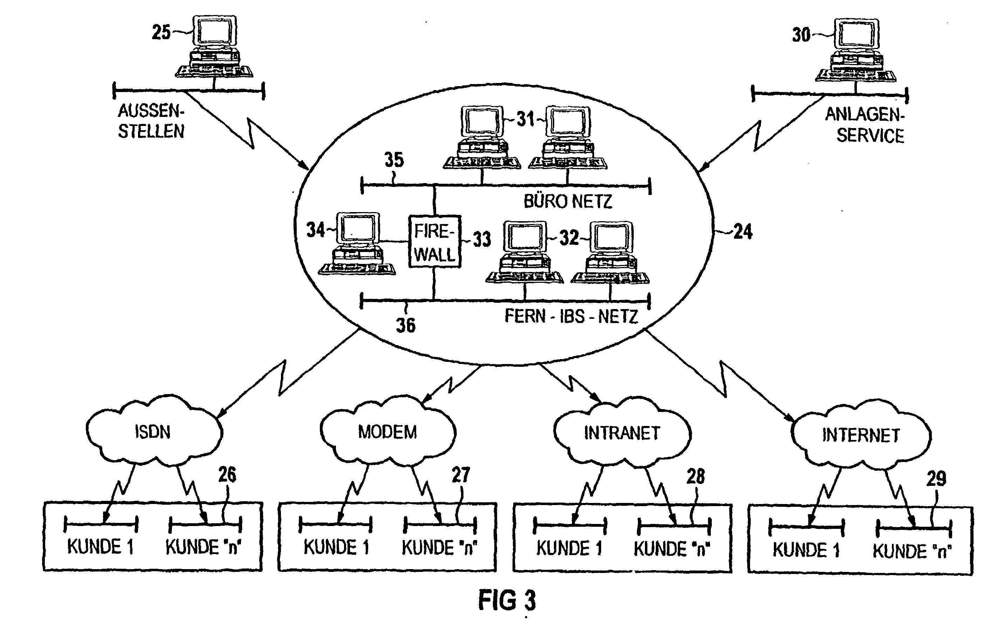

FIG 3 zeigt den Kern der Technologiezentrale 24 mit Außenstellen 25. Der Kern der Technologiezentrale 24 ist mit Kunden 26 bis 29 verbunden, wofür unterschiedliche Verbindungsmittel verwendet werden können. Das Kürzel SCN steht dabei für Firmen-Intranets, die auf spezielle Kunden ausgedehnt werden können. Desweiteren ist der Kern der Technologiezentrale 24 mit Anlagenservicestationen 30 verbunden, um den regionalen Servicebereichen direkte Anweisungen geben und ihre Erfahrungen auswerten zu können. Der Kern der Technolgiezentrale 24 weist ein Büronetz mit den Recheneinheiten 31 auf, die über einen Bus 35 miteinander verbunden sind. Weiterhin die Recheneinheiten 32, die für die Verbindung mit den Kunden sorgen und ebenfalls unter sich durch einen Bus 36 verbunden sind. Zwischen den beiden Bussen 35 und 36 befindet sich ein Firewall 33 mit einer Überwachungsstation 34. Der Firewall 33 verhindert auch, daß von außen ein unbefugter Durchgriff auf das innere Büronetz stattfinden kann. Das innere Netz ist vorteilhaft ein Ethernet mit Twisted Pair-Anschlüssen und weist vorteilhaft eine Übertragungsgeschwindigkeit von 10 Megabit/ Sekunde auf. Es arbeitet beispielsweise mit dem Protokoll TCP/IP und kann bis zu 3000 Endgeräte enthalten. Es ist also möglich, eine ganze Abteilung oder einen ganzen Unternehmensbereich mit den Daten des inneren Netzes zu versorgen. Als Backbone dient dabei ein FDDI-Home-Ring mit bis zu fünfzehn Servern und einer Übertragungsgeschwindigkeit von 100 Megabit/Sekunde. So können vorteilhaft schnell die Daten von Workstations oder echten Großrechnern, wie sie beispielsweise zum schnellen Trainieren von neuronalen Netzen vorteilhaft sind, übertragen werden. Auch ein Zusammenarbeiten vieler Mitarbeiter im Endstadium einer Ferninbetriebsetzung ist zur Zeitverkürzung ohne Schwierigkeiten möglich.

Von Bedeutung ist ein Firewall dafür, daß keine Viren oder Sabotagebefehle eingeschleppt werden können. Geeignete Programme für Firewalls sind bekannt, ihr Updating und die Kontrolle auf unbefugte Zugriffe erfolgt über die Station 34.

Die Programmierung im Rahmen der anlagenspezifischen und allgemeinen Module erfolgt vorteilhaft teilweise objektorientiert, beispielsweise durch die Programmiersprache C++ wobei vorteilhaft ein Workflowsystem mit Case-Tools verwendet werden kann.

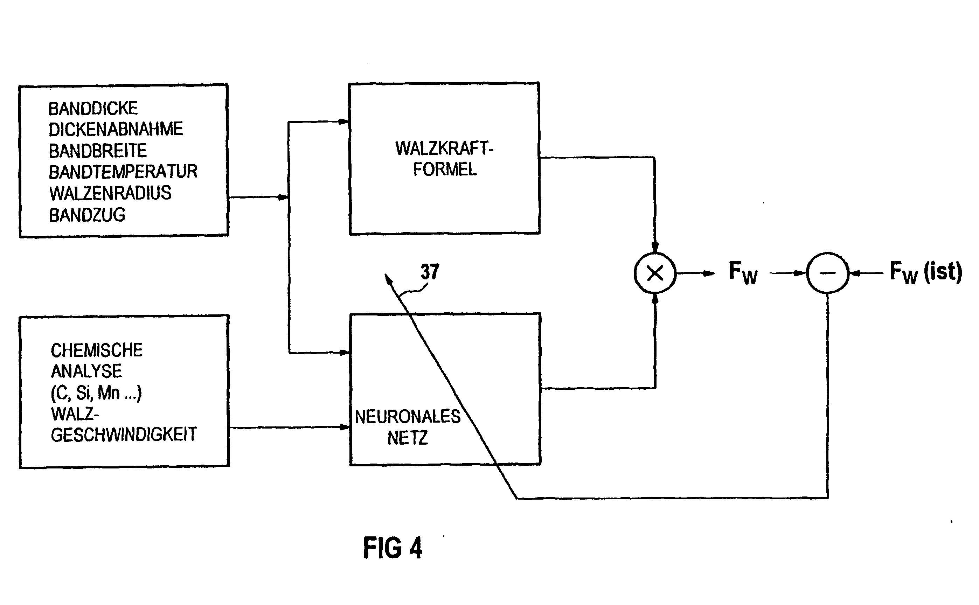

FIG 4 zeigt schematisch am Beispiel eines Walzwerks Zusammenwirken und Training eines neuronalen Netzes mit einem Algorithmus für die Walzkraft. Dabei werden z.B. die Banddicke, die Dickenabnahme, die Bandbreite, die Temperatur, der Walzenradius und der Bandzug berücksichtigt. Diese Werte werden sowohl dem Algorithmus als auch dem neuronalen Netz aufgegeben. Weiterhin werden dem neuronalen Netz die Einzelheiten der chemischen Analyse und die Walzgeschwindigkeit aufgegeben und die Werte aus dem Walzkraftalgorithmus und dem neuronalen Netz in dem mit X bezeichneten Punkt zusammengeführt. Daraus ergibt sich ein Sollwert für die Walzkraft, der mit dem tatsächlichen Walzkraftwert verglichen wird. Die Differenz wird wiederum dem neuronalen Netz als Feedback-Wert aufgegeben, so daß sich ein adaptiver Rückwärtskreis ergibt. Der Pfeil 37 soll bedeuten, daß eine entsprechend der angegebenen Differenz erfolgende Anpassung der einzelnen Netzgewichte stattfindet. Diese führt zu einer laufenden Anpassung des Verhaltens des neuronalen Netzes entsprechend dem tatsächlichen Verhalten der Walzstraße bei dem jeweils gewalzten Material. Auch eine "Tagesform" der Walzstraße kann so berücksichtigt werden. Die Produktionsergebnisse der Walzstraße sind besser als bei einer herkömmlichen Regelung.

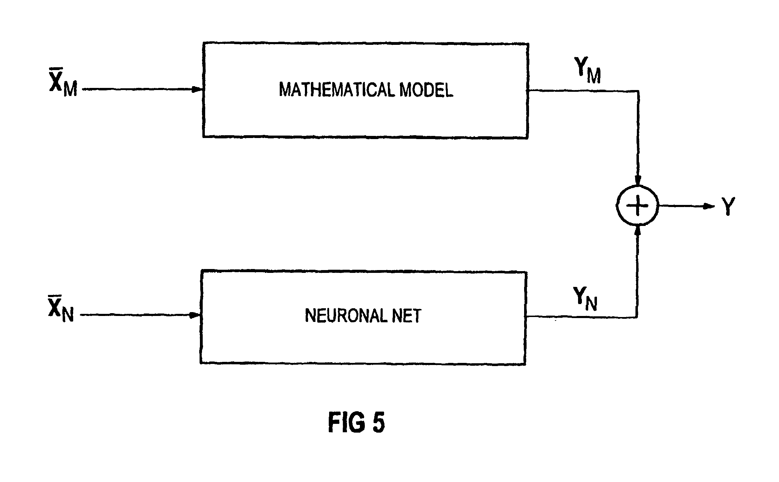

FIG 5 schließlich zeigt ein vorwärtswirkendes Beispiel des Zusammenwirkens eines mathematischen Modells (Algorithmus) mit einem neuronalen Netz. Hier erfolgt eine einfache additive Verbesserung der generierten Regelgröße.

Es versteht sich, daß außer neuronalen Netzen auch noch andere Softwaremodule z.B. mit Expertenwissen, eventuell unter Zuhilfenahme von Grenzkurven, zur Anlagenführung eingesetzt werden können. Dies erfolgt insbesondere für Gieß- und Schmelzprozesse. Das erfindungsgemäße Inbetriebsetzungs- und technologische Optimierungsverfahren und -system ist dabei unabhängig von den einzelnen regeltechnischen Modulen für unterschiedliche Anlagen einsetzbar. Für eine Regeltechnik, die mit Hilfe von neuronalen Netzen arbeitet, ist sie jedoch besonders vorteilhaft.

## Patentansprüche

1. Verfahren zur Inbetriebsetzung von Industrieanlagen, insbesondere der Grundstoffindustrie, mit einem Anlagenleitsystem mit zumindest einer Non-Controlfunktion zur Steuerung und Regelung der Grundfunktionen der Anlage und einem technologisch speziell ausgebildeten Controlfunktion mit die Qualität des hergestellten Produkts beeinflussender Funktion, wobei dieser Teil mit Prozeßmodellen, insbesondere regeltechnischen Modellen, etwa in der Form von mathematischen Modellen, neuronalen Netzmodellen, Expertensystemen etc. in einer Leitsystemrecheneinheit arbeitet, **dadurch gekennzeichnet, daß** die Inbetriebsetzung in eine Basis-Inbetriebsetzung der Non-Controlfunktion mit weitgehender Initialisierung der Controlfunktion durch eine vor Ort befindliche Mannschaft und eine dieser Basis-Inbetriebsetzung folgende Inbetriebsetzung der Controlfunktion als technologische Inbetriebsetzung, in dem Modellrechnungen zur technologischen Optimierung durchgeführt werden, durch fernübertragene Daten über Datenleitungen von zumindest einem anlagenfernen Ort, vorzugsweise von einer Technologiezentrale aus, unterteilt durchgeführt wird, wobei nach der Inbetriebsetzung eine laufende technologische Qualitätsoptimierung durch Prozeßmodellverbesserungen in der Controlfunktion durchgeführt wird.

2. Verfahren zur Inbetriebsetzung nach Anspruch 1, **dadurch gekennzeichnet, daß** bei der Inbetriebsetzung der Controlfunktionen eine technologische Optimierung durchgeführt wird.

3. Verfahren nach Anspruch 2, **dadurch gekennzeichnet**, daß die technologisch optimierende Inbetriebsetzung durch Optimierungen erfolgt, die fernbeeinflußt in zumindest einer Leitsystemrecheneinheit der Anlage durchgeführt werden.

4. Verfahren nach Anspruch 1, 2 oder 3, **dadurch gekennzeichnet**, daß die technologische optimierende Inbetriebsetzung und/oder Betriebsverbesserung durch eine fernbeeinflußte Verbesserung der Non-Controlfunktionen ergänzt wird.

5. Verfahren nach Anspruch 1, 2, 3 oder 4, **dadurch gekennzeichnet, daß** die Optimierung sich auf die Parametrierung von Modellen, insbesondere in Form von Algorithmen oder künstlichen neuronalen Netzen (KNN), sowie auf eine Weiterentwicklung der Algorithmen der Modelle oder der Ausbildung der KNN, aber auch von rechentechnisch ausgewertetem Expertenwissen, etwa in Form von Grenzkurven etc. bezieht.

6. Verfahren zur Ferninbetriebsetzung nach einem oder mehreren der vorhergehenden Ansprüche, **dadurch gekennzeichnet, daß** bei der Verwendung von neuronalen Netzen als Prozeßmodelle eine Adaption parallel zu einem Netztraining stattfindet.

7. Verfahren nach Anspruch 6, **dadurch gekennzeichnet, daß** das neuronale Netz zur Verbesserung von Algorithmen und/oder Modellen eingesetzt wird, wobei ein geschlossener Kreis gebildet wird, der als unmittelbar geschlossener Kreis in einer Leitsystemrecheneinheit oder als mittelbar über die Technologiezentrale geschlossener Kreis, ausgebildet ist.

8. Verfahren nach einem oder mehreren der vorhergehenden Ansprüche, **dadurch gekennzeichnet**, daß die Weiterentwicklung von Modellen mit Hilfe einer Evolutionsstrategie, z.B. über genetische Algorithmen, durchgeführt wird.

9. Inbetriebsetzungs- oder Anlagenbetriebsverbesserungssystem zur Inbetriebsetzung von Industrieanlagen, insbesondere der Grundstoffindustrie, insbesondere zur Durchführung eines Verfahrens nach einem der Ansprüche 1 bis 8, wobei das Inbetriebsetzungs- oder Anlagenbetriebsverbesserungssystem ein Anlagenleitsystem (1) mit zumindest einem Non-Controlteil zur Steuerung und Regelung der Grundfunktionen der Anlage (2) und einem technologisch speziell ausgebildeten Controlteil mit die Qualität des hergestellten Produkts beeinflussender Funktion aufweist, wobei dieser Teil mit Prozeßmodellen, insbesondere regeltechnischen Modellen, etwa in der Form von mathematischen Modellen, neuronalen Netzmodellen, Expertensystemen etc. in einer Leitsystemrecheneinheit arbeitet,
**dadurch gekennzeichnet, daß** das Inbetriebsetzungs- und Anlagenbetriebsverbesserungssystem eine Basis-Inbetriebsetzung des Non-Controlteils mit weitgehender Initialisierung des Controlteils durch eine vor Ort befindliche Mannschaft (5) im Rahmen der Basis-Inbetriebsetzung ermöglichend und eine der Basis-Inbetriebsetzung folgende Inbetriebsetzung des Controlteils als technologische Inbetriebsetzung, wobei im Controlteil Modellrechnungen zur technologischen Optimierung durchgeführt werden, durch fernübertragene Daten über Datenleitungen von zumindest einem anlagenfernen Ort, vorzugsweise von einer Technologiezentrale (7 bis 11, 12 bis 25) aus, unterteilt durchführend ausgebildet ist, wobei nach der Inbetriebsetzung eine laufende technologische Qualitätsoptimierung durch Prozeßmodellverbesserungen im Controlteil durchführbar ist.

10. Inbetriebsetzungs- oder Anlagenbetriebsverbesserungssystem nach Anspruch 9, **dadurch gekennzeichnet, daß** es in einer Technologiezentrale (7 bis 11, 12 bis 25) ein internes Netz (21) aufweist, das vorzugsweise als Ethernet mit Twisted Pair-Verbindungen mit insbesondere mindestens 10 Megabit pro Sekunde Übertragungsgeschwindigkeit ausgerüstet ist, das vorzugsweise nach dem Protokoll TCP-IP arbeitend ausgebildet ist.

11. Inbetriebsetzungs- oder Anlagenbetriebsverbesserungssystem nach Anspruch 9 oder 10, **dadurch gekennzeichnet, daß** es ein Fern-Inbetriebsetzungs- oder Betriebsverbesserungsnetz (24) aufweist, das bekannte, übliche Datenübertragungskomponenten, wie ISDN, Telefon-Modems, Internet-Anschlüsse, besitzt und durch zumindest eine Sicherheits-Datenübergabeeinrichtung als sog. Firewall mit der Technologiezentrale verbunden ist.

12. Inbetriebsetzungs- oder Anlagenbetriebsverbesserungssystem nach Anspruch 9, 10 oder 11, **dadurch gekennzeichnet, daß** die Inbetriebsetzungs- oder Betriebsverbesserungszentrale (24) Außenstellen (25), z.B. Projektbüros aufweist, die räumlich getrennt, aber datentechnisch, z.B. über ISDN-Leitungen, mit dieser verbunden sind und mit dieser die Technologiekompetenz bilden.

13. Inbetriebsetzungs- oder Anlagenbetriebsverbesserungssystem nach Anspruch 9, 10, 11 oder 12, **dadurch gekennzeichnet, daß** die Inbetriebsetzungsoder Betriebsverbesserungszentrale (24) eine Administratoreinheit, insbesondere mit einer Auswertesoftware für gesammelte Daten aufweist und gleichzeitig zur Logbuchführung geeignet ausgebildet ist.

14. Inbetriebsetzungs- oder Anlagenbetriebsverbesserungssystem nach Anspruch 9, 10, 11, 12 oder 13, **dadurch gekennzeichnet**, daß sie für ISDN- und Internet-Verbindungen Router aufweist, die die gewünschten Verbindungen herstellen.

15. Inbetriebsetzungs- oder Anlagenbetriebsverbesserungssystem nach einem oder mehreren der Ansprüche 9 bis 14, **dadurch gekennzeichnet, daß** es im Leitsystem (1) der Anlage (2) rechentechnische Technologiemodule (3), eine Datensammlungseinheit (4) etc. sowie in der Zentrale Personal (7) mit technologischem Wissen, Datenbanken (10) für die jeweiligen Kunden, allgemeine und kundenspezifische Technologiemodule (8, 9), insbesondere in einer in das Anlagenleitsystem modulartig eingebbaren Form, aufweist.

16. Inbetriebsetzung- oder Anlagenbetriebsverbesserungssystem nach einem oder mehreren der Ansprüche 9 bis 15, **dadurch gekennzeichnet, daß** es im Anlagenleitsystem (1) Recheneinrichtungen für die Adaption anlagenspezifischer Parameter, für das Speichern anlagenspezifisch ausgebildeter Modelle, für das Speichern von Vorausberechnungsalgorithmen, für das Speichern von Trendverfolgungen und für das Speichern von Adapationsalgorithmen aufweist.

17. Inbetriebsetzungs- oder Anlagenbetriebsverbesserungssystem nach einem oder mehreren der Ansprüche 9 bis 16,
**dadurch gekennzeichnet**, daß es im Anlagenleitsystem (1) oder in der Zentrale (7 bis 11, 12 bis 25) Recheneinrichtungen für das Training oder zur Optimierung von neuronalen Netzen (KNN) sowie gegebenenfalls Diagnosespeicher sowie weitere für die technologische Optimierung der Anlage erforderliche Recheneinrichtungen aufweist, die über Datenfernübertragungsmittel oder interne Datenübertragungsmittel beeinflußt werden können.

18. Inbetriebsetzungs- oder Betriebsverbesserungssystem nach einem oder mehreren der Ansprüche 9 bis 17, **dadurch**
**gekennzeichnet**, daß es in der Inbetriebsetzungs- oder Betriebsverbesserungszentrale (24) unspezifische Hardwareeinrichtungen, Softwaretools, Inbetriebsetzungstools, Softwareentwicklungstools, Softwareevolutionstools, KNN-Trainingstools, statistische Auswertungsprogramme etc., zur anlagenneutralen Verwendung und spezielle Softwaretools etc. die anlagenspezifisch ausgebildet sind, aufweist.

## Claims

1. Method for commissioning industrial plants, in particular in the basic materials industry, having a plant control system with at least one non-control function for controlling and regulating the basic functions of the plant and a technologically specifically designed control function with a function influencing the quality of the product produced, this part operating with process models, in particular control engineering models, for example in the form of mathematical models, neural network models, expert systems etc., in a control system computing unit, **characterized in that** the commissioning is carried out subdivided into basic commissioning of the non-control function, with extensive initialization of the control function, by means of personnel located on site, and commissioning, following this basic commissioning, of the control function as engineering commissioning, in which model calculations for engineering optimization are carried out, by means of remotely-transmitted data via data lines from at least one site remote from the plant, preferably from an engineering centre, following the commissioning a continuous, engineering quality optimization being carried out by means of process-model improvements in the control function.

2. Method for commissioning according to Claim 1, **characterized in that** engineering optimization is carried out while commissioning the control functions.

3. Method according to Claim 2, **characterized in that** the engineering-optimizing commissioning is performed by means of optimizations which are carried out under remote influence in at least one control system computing unit of the plant.

4. Method according to Claim 1, 2 or 3, **characterized in that** the engineering-optimization commissioning and/or operational improvement is supplemented by remotely-influenced improvement of the non-control functions.

5. Method according to Claim 1, 2, 3 or 4, **characterized in that** the optimization relates to setting parameters for models, in particular in the form of algorithms or artificial neural networks (ANN), and to further development of the algorithms of the models or of the design of the ANN, but also of expert knowledge evaluated by computer, for example in the form of limiting curves etc.

6. Method for remote commissioning according to one or more of the preceding claims, **characterized in that**, in the case of using neural networks as process models, the adaptation takes place in parallel with network training.

7. Method according to Claim 6, **characterized in that** the neural network is used for the improvement of algorithms and/or models, a closed loop being formed which is designed as a directly closed loop in a control system computing unit or as a loop which is closed indirectly via the engineering centre.

8. Method according to one or more of the preceding claims, **characterized in that** the further development of models is carried out with the aid of an evolution strategy, for example via genetic algorithms.

9. Commissioning or plant operational improvement system, for commissioning industrial plants, in particular in the basic materials industry, in particular for carrying out a method according to one of Claims 1 to 8, the commissioning or plant operational improvement system having a plant control system (1) with at least one non-control part for controlling and regulating the basic functions of the plant (2) and a technologically specifically designed control part with a function influencing the quality of the product produced, this part operating with process models, in particular control engineering models, for example in the form of mathematical models, neural network models, expert systems, etc. in a control system computing unit, **characterized in that** the commissioning and plant operational improvement system is designed to be carried out subdivided so as to permit basic commissioning of the non-control part, with extensive initialization of the control part by means of personnel (5) located on site within the context of the basic commissioning, and commissioning the control part, following the basic commissioning, as engineering commissioning, model calculations for the engineering optimization being carried out in the control part, by means of remotely-transmitted data via data lines from at least one site remote from the plant, preferably from an engineering centre (7 to 11, 12 to 25), following the commissioning, a continuous, engineering quality optimization being able to be carried out by means of process-model improvements in the control part.

10. Commissioning or plant operational improvement system according to Claim 9, **characterized in that** it has, in an engineering centre (7 to 11, 12 to 25), an internal network (21) which is preferably equipped as an Ethernet with twisted-pair connections, having in particular at least a 10 megabit per second transmission speed, which is preferably designed to operate according to the TCP-IP protocol.

11. Commissioning or plant operational improvement system according to Claim 9 or 10, **characterized in that** it has a remote commissioning or operational improvement network (24) which has known, conventional data transmission components, such as ISDN, telephone modems, Internet connections, and is connected to the engineering centre by means of at least one security data transfer device as a so-called firewall.

12. Commissioning or plant operational improvement system according to Claim 9, 10 or 11, **characterized in that** the commissioning or operational improvement centre (24) has external sites (25), for example project offices, which are physically separate but connected in terms of data, for example via ISDN lines, to said centre and, together with the latter, form the engineering expertise.

13. Commissioning or plant operational improvement system according to Claim 9, 10, 11 or 12, **characterized in that** the commissioning or operational improvement centre (24) has an administrator unit, in particular having evaluation software for collected data, and is simultaneously designed to be suitable for logbook maintenance.

14. Commissioning or plant operational improvement system according to Claim 9, 10, 11, 12 or 13, **characterized in that** it has routers, which set up the desired connections, for ISDN and Internet connections.

15. Commissioning or plant operational improvement system according to one or more of Claims 9 to 14, **characterized in that** it has, in the control system (1) of the plant (2), computing engineering modules (3), a data collection unit (4), etc., and in the centre personnel (7) with engineering knowledge, databases (10) for the respective clients, general and client-specific engineering modules (8, 9), in particular in a form which can be input like modules into the plant control system.

16. Commissioning or plant operational improvement system according to one or more of Claims 9 to 15, **characterized in that** it has, in the plant control system (1), computing devices for the adaptation of plant-specific parameters, for the storage of models designed specifically for the plant, for the storage of prior calculation algorithms, for the storage of trend sequences and for the storage of adaptation algorithms.

17. Commissioning or plant operational improvement system according to one or more of Claims 9 to 16, **characterized in that** it has, in the plant control system (1) or in the centre (7 to 11, 12 to 25), computer units for the training or for the optimization of neural networks (ANN), as well as diagnostic stores, if appropriate, and further computing units which are necessary for the engineering optimization of the plant and can be influenced via remote data transmission means or internal data transmission means.

18. Commissioning or operational improvement system, according to one or more of Claims 9 to 17, **characterized in that** it has, in the commissioning or operational improvement centre (24), non-specific hardware devices, software tools, commissioning tools, software development tools, software evolution tools, ANN training tools, statistical evaluation programs etc. for plant-neutral use, and special software tools, etc. which are of plant-specific design.

## Revendications

1. Procédé de mise en service d'installations industrielles, notamment de l'industrie extractive, comprenant un système de gestion d'installation comportant au moins une fonction de non-contrôle pour la commande et la régulation des fonctions de base de l'installation et une fonction de contrôle conçue spécialement au niveau technologique avec une fonction influençant la qualité du produit fabriqué, cette partie travaillant avec des modèles de processus, notamment des modèles de régulation technique, par exemple sous la forme de modèles mathématiques, de modèles à réseaux neuronaux, de systèmes experts, etc., dans un ordinateur de système de gestion, **caractérisé par** le fait que la mise en service est effectuée divisée en une mise en service de base de la fonction de non-contrôle avec large initialisation de la fonction de contrôle par une équipe se trouvant sur place et en une mise en service de la fonction de contrôle, qui suit cette mise en service de base, comme mise en service technologique, des calculs de modèles étant mis en oeuvre pour l'optimisation technologique, par des données transmises à distance par l'intermédiaire de lignes de données depuis au moins un lieu éloigné de l'installation, de préférence depuis un centre technologique, une optimisation de qualité technologique continue étant effectuée après la mise en service par des améliorations de modèles de processus dans la fonction de contrôle.

2. Procédé de mise en service selon la revendication 1, **caractérisé par** le fait qu'on effectue une optimisation technologique lors de la mise en service des fonctions de contrôle.

3. Procédé selon la revendication 2, **caractérisé par** le fait qu'on effectue la mise en service à optimisation technologique au moyen d'optimisations qui sont effectuées, influencées à distance, dans au moins un ordinateur de système de gestion de l'installation.

4. Procédé selon la revendication 1, 2 ou 3, **caractérisé par** le fait qu'on complète la mise en service à optimisation technologique et/ou l'amélioration de fonctionnement par une amélioration, influencée à distance, des fonctions de non-contrôle.

5. Procédé selon la revendication 1, 2, 3 ou 4, **caractérisé par** le fait que l'optimisation se rapporte au paramétrage de modèles, notamment sous la forme d'algorithmes ou de réseaux neuronaux artificiels (KNN), ainsi qu'au perfectionnement des algorithmes des modèles ou à la conception des réseaux neuronaux artificiels KNN mais aussi de connaissances d'experts évaluées par ordinateur, par exemple sous la forme de courbes limites, etc.

6. Procédé de mise en service à distance selon une ou plusieurs des revendications précédentes, **caractérisé par** le fait que, lors de l'utilisation de réseaux neuronaux comme modèles de processus, une adaptation a lieu parallèlement à un apprentissage de réseau.

7. Procédé selon la revendication 6, **caractérisé par** le fait qu'on utilise le réseau neuronal pour améliorer des algorithmes et/ou des modèles, un circuit fermé étant formé, lequel est conçu comme un circuit fermé directement dans un ordinateur de gestion de système ou comme un circuit fermé indirectement par l'intermédiaire du centre technologique.

8. Procédé selon une ou plusieurs des revendications précédentes, **caractérisé par** le fait que le perfectionnement de modèles est effectué à l'aide d'une stratégie d'évolution, par exemple par l'intermédiaire d'algorithmes génétiques.

9. Système de mise en service ou d'amélioration de fonctionnement d'installation pour la mise en service d'installations industrielles, notamment de l'industrie extractive, notamment pour la mise en oeuvre d'un procédé selon l'une des revendications 1 à 8, dans lequel le système de mise en service ou d'amélioration de fonctionnement d'installation comporte un système de gestion d'installation (1) avec au moins une partie de non-contrôle pour commander et réguler les fonctions de base de l'installation (2) et une partie de contrôle conçue spécialement au niveau technologique avec une fonction influençant la qualité du produit fabriqué et dans lequel cette partie travaille avec des modèles de processus, notamment des modèles de régulation technique, par exemple sous la forme de modèles mathématiques, de modèles à réseaux neuronaux, de systèmes experts, etc., dans un ordinateur de système de gestion, **caractérisé par** le fait que le système de mise en service ou d'amélioration de fonctionnement d'installation est conçu pour effectuer séparément une mise en service de base de la partie de non-contrôle avec large initialisation de la fonction de contrôle par une équipe (5) se trouvant sur place dans le cadre de la mise en service de base et une mise en service de la partie de contrôle, qui suit la mise en service de base, comme mise en service technologique, des calculs de modèles étant mis en oeuvre pour l'optimisation technologique dans la partie de contrôle, par des données transmises à distance par l'intermédiaire de lignes de données depuis au moins un lieu éloigné de l'installation, de préférence depuis un centre technologique (7 à 11, 12 à 25), une optimisation de qualité technologique continue pouvant être effectuée après la mise en service par des améliorations de modèles de processus dans la partie de contrôle.

10. Système de mise en service ou d'amélioration de fonctionnement d'installation selon la revendication 9, **caractérisé par** le fait qu'il comporte dans un centre technologique (7 à 11, 12 à 25) un réseau interne (21) qui est équipé de préférence sous forme Ethernet avec liaisons à paires torsadées ayant en particulier une vitesse de transmission d'au moins 10 Megabit par seconde et qui est conçu de manière à travailler de préférence selon le protocole TCP-IP.

11. Système de mise en service ou d'amélioration de fonctionnement d'installation selon la revendication 9 ou 10, **caractérisé par** le fait qu'il comporte un réseau de mise en service ou d'amélioration de fonctionnement à distance (24) qui a des éléments de transmission de données usuels connus, par exemple RNIS, modems de téléphones, connexions Internet, et qui est relié au centre technologique par l'intermédiaire d'au moins un dispositif de transmission de données à sécurité dit Firewall.

12. Système de mise en service ou d'amélioration de fonctionnement d'installation selon la revendication 9, 10 ou 11, **caractérisé par** le fait que le centre de mise en service ou d'amélioration de fonctionnement (24) comporte des postes extérieurs (25), par exemple des bureaux d'études, qui sont séparés dans l'espace mais qui sont reliés au niveau informatique, par exemple via des lignes RNIS, à ce centre de mise en service ou d'amélioration de fonctionnement et qui forment avec celui-ci la compétence technologique.

13. Système de mise en service ou d'amélioration de fonctionnement d'installation selon la revendication 9, 10, 11 ou 12, **caractérisé par** le fait que le centre de mise en service ou d'amélioration de fonctionnement (24) comporte une unité d'administration, notamment avec un logiciel d'évaluation pour des données collectées, et est conçu en même temps de manière appropriée pour la tenue du journal de bord.

14. Système de mise en service ou d'amélioration de fonctionnement d'installation selon la revendication 9, 10, 11, 12 ou 13, **caractérisé par** le fait qu'il comporte pour des liaisons RNIS et Internet des dispositifs d'acheminement qui établissent les liaisons souhaitées.

15. Système de mise en service ou d'amélioration de fonctionnement d'installation selon une ou plusieurs des revendications 9 à 14, **caractérisé par** le fait qu'il comporte dans le système de gestion (1) de l'installation (2) des modules technologiques de calcul technique (3), une unité de collecte de données (4), etc. ainsi que dans le centre un personnel (7) ayant des connaissances technologiques, des bases de données (10) pour les clients respectifs, des modules technologiques (8, 9) généraux ou spécifiques aux clients, notamment sous une forme pouvant être entrée comme un module dans le système de gestion d'installation.

16. Système de mise en service ou d'amélioration de fonctionnement d'installation selon une ou plusieurs des revendications 9 à 15, **caractérisé par** le fait qu'il comporte dans le système de gestion d'installation (1) des dispositifs de calcul ou ordinateurs pour l'adaptation de paramètres spécifiques aux installations, pour la mémorisation de modèles conçus spécifiques aux installations, pour la mémorisation d'algorithmes de calculs prévisionnels, pour la mémorisation de poursuites de tendances et pour la mémorisation d'algorithmes d'adaptation.

17. Système de mise en service ou d'amélioration de fonctionnement d'installation selon une ou plusieurs des revendications 9 à 16, **caractérisé par** le fait qu'il comporte dans le système de gestion d'installation (1) ou dans le centre (7 à 11, 12 à 25) des dispositifs de calcul ou ordinateurs pour l'apprentissage ou l'optimisation de réseaux neuronaux (KNN) ainsi que le cas échéant des mémoires de diagnostic et d'autres dispositifs de calcul ou ordinateurs nécessaires à l'optimisation technologique de l'installation, lesquels peuvent être influencés par l'intermédiaire de moyens de transmission de données distants ou de moyens de transmission de données internes.

18. Système de mise en service ou d'amélioration de fonctionnement d'installation selon une ou plusieurs des revendications 9 à 17, **caractérisé par** le fait qu'il comporte dans le centre de mise en service ou d'amélioration de fonctionnement (24) des dispositifs matériels non spécifiques, des outils logiciels, des outils de mise en service, des outils de développement de logiciels, des outils d'évolution de logiciels, des outils d'apprentissage pour réseaux neuronaux KNN, des programmes d'évaluation statistiques, etc., en vue d'une utilisation neutre quant à l'installation, et des outils de logiciels, etc. spéciaux qui sont conçus spécifiques à l'installation.
